(19) Europäisches Patentamt
European Patent Office
Office européen des brevets

(11) EP 2 742 093 B1

(12) EUROPEAN PATENT SPECIFICATION

(45) Date of publication and mention of the grant of the patent:
**28.09.2016 Bulletin 2016/39**

(21) Application number: **12751289.5**

(22) Date of filing: **08.08.2012**

(51) Int Cl.:
***C08L 23/10*** ^(2006.01)^

(86) International application number:
**PCT/EP2012/065517**

(87) International publication number:
**WO 2013/021003 (14.02.2013 Gazette 2013/07)**

(54) **COMPOSITION WITH IMPROVED LONG TERM SCRATCH RESISTANCE AND REDUCED SURFACE TACK**

POLYPROPYLENHARZZUSAMMENSETZUNG MIT VERBESSERTER OBERFLÄCHENHÄRTE UND KRATZFESTIGKEIT

COMPOSITION DE RESINE DE POLYPROPYLENE DONT LA DURETE SUPERFICIELLE ET LA RESISTANCE AUX RAYURES SONT AMELIOREES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2011 EP 11177311**

(43) Date of publication of application:
**18.06.2014 Bulletin 2014/25**

(73) Proprietor: **Borealis AG**
**1220 Vienna (AT)**

(72) Inventors:
- **LEDERER, Klaus**
  **A-4020 Linz (AT)**
- **KASTNER, Erwin**
  **A-4040 Linz (AT)**
- **GRESTENBERGER, Georg**
  **A-3352 St. Peter in der Au (AT)**

(74) Representative: **Maiwald Patentanwalts GmbH**
**Elisenhof**
**Elisenstrasse 3**
**80335 München (DE)**

(56) References cited:
**WO-A1-2009/092691**
**WO-A1-2011/023594**
**US-A1- 2004 014 891**
**US-A1- 2006 009 554**
**US-A1- 2010 152 360**
**US-A1- 2010 240 818**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 742 093 B1

## Description

The present invention is directed to a new automotive interior article comprising a composition comprising a heterophasic propylene copolymer (HECO) and a specific fatty acid amide derivative. Furthermore the present invention relates to use of a composition as well as of a slip agent to improve surface tack and/or scratch resistance.
Automotive interior parts like dashboards, door claddings, trims are commonly made from polymers. Especially propylene based resins and in particular TPO / talc compounds are widely used for these applications.
For such parts it is often tried to mimic a leather- or fabric-like surface and touch in order to give occupants a high-quality impression of the car. As a result materials should provide a low surface gloss level and good haptics respectively low values for surface tack. Additionally to maintain the high-quality perception of the parts till the end of the car's lifetime the polymer should provide a high resistance to scratches e.g. from keys, fingernails, rings.
In comparison to metals polymers have rather low stiffness and surface hardness and hence are much more prone to scratches apart from material design and filler addition usually additives are used to overcome this drawback.
WO 2006/131455A1 discloses a scratch resistant polyolefincompound containing a specific additive combination, said compound comprises the following components

a) a polyolefin substrate and an amount effective to improve the scratch resistance and light stability of said polyolefin substrate of an additive combination of
b) a carboxylic acid reagent functionalized olefin polymer or copolymer, c) a primary or secondary fatty acid amide and d) a combination of i) a low molecular weight sterically

hindered amine light stabilizer and ii) a high molecular weight sterically hindered amine light stabilizer.
In EP 2083046 A1 a thermoplastic elastomer composition is disclosed comprising a thermoplastic polymer, an ethylene-alpha olefin plastomer and a peroxide. Said composition features an improved scratch resistance and no to low gloss change of the finished product during heat ageing (60° gloss measured on grain VWK09 96h at 120°C).
It is known to people skilled in the art that scratch resistance of TPO / talc compounds can be improved by the addition of slip agents e.g. compare WO 2007/139622 A3, WO 02/22731 A2, WO 2005/111145 A1, WO 2006/063698 A1. Slip agents like fatty acid amides (Eruc-amide, Oleamide, Stearamide, Behenamide) reduce the coefficient of friction of polymeric surfaces by migrating from the bulk to the surface. In some of the above mentioned applications also polyethylene is added (preferably high density polyethylene (HDPE)). Polyethylene affects the morphology of the dispersed rubber phase stabilizing the surface and immediate subsurface layer of injection mouldings.
In combination both mechanisms lead to very cost efficient scratch resistant material formulations. However apart from scratch resistance and gloss also haptics is becoming more and more important for interior applications. One factor in this respect is the surface tack of a part. Unfortunately it was claimed several times that fatty acid amides lead to a tacky feel of the surface (e.g. Huber, G. ;Solera, P.: New Additive to Improve Scratch Resistance and Reduce Surface-Tack for Automotive Applications. First Automotive Congress - Plastics in Motion 2006; Botkin, J.:Technical Approaches to Improving the Scratch Resistance of TPO's. Part1: Surface Lubrication. SPE Automotive TPO Global Conference 2007). Therefore alternative routes to improve the scratch performance of compounds at reasonable cost are targeted.
Polydimethylsiloxanes are known to improve scratch resistance combined with good haptics (compare e.g. EP 2083046 A1, Botkin, J.:Technical Approaches to Improving the Scratch Resistance of TPO's. Part1 : Surface Lubrication. SPE Automotive TPO Global Conference 2007). However main drawback of this type of scratch resistance additives is their high price combined with high required loading (typically 2 to 3 wt.-%).
Accordingly the object of the present invention is to provide an additive which enables a skilled person to provide a polypropylene with improved long term scratch resistance as well as reduced surface tack. A further object of the present invention is to provide an automotive interior article with improved long term scratch resistance and reduced surface tack.
The finding of the present invention is that one slip agent must be used being a fatty acid amide derivative.
Thus the present invention is directed to Use of a fatty acid amide derivative of formula (I) wherein Ri is a C5 to C25 alkyl residue or C5 to C25 alkenyl residue, R2 is a long-chain organic residue containing at least 6 carbon atoms, in an amount of 2500 to 18000 ppm in an article comprising a heterophasic propylene copolymer (HECO) to reduce the surface tack in comparison with the same article but without a slip agent.
In following the compounds of the present invention are described in more detail.

### Heterophasic propylene copolymer (HECO)

One essential component is the presence of a heterophasic propylene copolymer. Heterophasic polymer systems are well known in the art and are systems in particular obtained in a process comprising at least two steps resulting

in a multiphase structure comprising a polypropylene matrix and inclusions therein comprising amorphous elastomer. Such systems can be easily tailored for the automotive requirements by setting the comonomer content in the polypropylene matrix and in the elastomeric phase respectively.

More precisely, a heterophasic propylene copolymer (HECO) according to this invention comprises as matrix a random propylene copolymer or a propylene homopolymer and dispersed therein an elastomeric propylene copolymer. Thus the matrix contains (finely) dispersed inclusions being not part of the matrix and said inclusions contain the elastomeric propylene copolymer. The term inclusion indicates that the matrix and the inclusion form different phases within the heterophasic propylene copolymer (HECO), said inclusions are for instance visible by high resolution microscopy, like electron microscopy or scanning force microscopy.

Preferably the heterophasic propylene copolymer (HECO) may contain further additives but no other polymer in an amount exceeding 5 wt.-%, more preferably exceeding 3 wt.-%, like exceeding 1 wt.-%, based on the total amount of the heterophasic polymer. One additional polymer which may be present in such low amounts is a polyethylene which is a reaction product obtained by the preparation of the heterophasic propylene copolymer (HECO). Accordingly it is in particular appreciated that a heterophasic propylene copolymer (HECO) as defined in the present invention contains only a polypropylene matrix, an elastomeric propylene copolymer, and optionally a polyethylene in amounts as mentioned in this paragraph.

Preferably the propylene content in the heterophasic polymer is in the range of 70 to 92 wt.-%, more preferably in the range of 75 to 85 wt.-%, yet more preferably in the range of 78 to 82 wt.-%, based on the total amount of the heterophasic propylene copolymer (HECO), more preferably based on the amount of the polymer components of the heterophasic propylene copolymer (HECO), yet more preferably based on the amount of the polypropylene matrix and the elastomeric propylene copolymer together. The remaining part constitutes the comonomers as defined for the polypropylene matrix being a random propylene copolymer and the elastomeric propylene copolymer, respectively, preferably ethylene. Accordingly the comonomer content, preferably ethylene content, for the total heterophasic propylene copolymer (HECO) is in the range of 8.0 to 30.0 wt.-%, more preferably in the range of 15.0 to 25.0 wt.-%, still more preferably in the range of 18.0 to 22.0 wt.-%, based on the total amount of the heterophasic propylene copolymer (HECO), more preferably based on the amount of the polymer components of the heterophasic propylene copolymer (HECO), yet more preferably based on the amount of the polypropylene matrix and the elastomeric propylene copolymer together.

The polypropylene matrix of the heterophasic propylene copolymer (HECO) can be made of the propylene homo- and/or copolymer only but can also comprise additional polymers, in particular polymers which can be blended homogeneously with the propylene homo- or copolymer and together form a continuous phase which can act as a matrix. In a preferred embodiment, at least 80 wt.-% of the matrix, more preferably at least 90 wt.-%, even more preferably at least 95 wt.-% of the matrix are made of the propylene homo- and/or copolymer. Even further preferred, the matrix consists of the propylene homo- and/or copolymer.

The propylene homo- and/or copolymer forming the matrix can be a random propylene copolymer or a propylene homopolymer. In a preferred embodiment, the matrix is a propylene homopolymer.

For the purpose of the present invention, the expression "propylene homopolymer" refers to a polypropylene that consists substantially, i.e. of at least 97 wt.-%, preferably of at least 98 wt.-%, more preferably of at least 99 wt.-%, most preferably of at least 99.8 wt.-% of propylene units. In a preferred embodiment only propylene units in the propylene homopolymer are detectable.

In case the propylene homo- and/or copolymer forming the matrix is a random propylene copolymer it comprises monomers copolymerizable with propylene, for example comonomers such as ethylene and/or $C_4$ to $C_{12}$ $\alpha$-olefins, in particular ethylene and/or $C_4$ to $C_{10}$ $\alpha$-olefins, e.g. 1-butene and/or 1-hexene. Preferably the random propylene copolymer comprises, especially consists of, monomers copolymerizable with propylene from the group consisting of ethylene, 1-butene and 1-hexene. More specifically the random propylene copolymer comprises - apart from propylene - units derivable from ethylene and/or 1-butene. In a preferred embodiment the random propylene copolymer comprises units derivable from ethylene and propylene only. The comonomer content in the random propylene copolymer is preferably in the range of more than 0.5 to 10.0 wt.-%, still more preferably in the range of more than 0.5 to 7.0 wt.-%.

The propylene homo- and/or copolymer matrix can have a xylene cold soluble content (XCS) in a broad range, i.e. up to 6.0 wt.-%, based on the total amount of propylene homo- and/or copolymer matrix. Accordingly the propylene homo- and/or copolymer matrix may have a xylene cold soluble content (XCS) in the range from 0.3 to 6.0 wt.-%, e.g., from 0.5 to 5.5 wt.-%, based on the amount of the propylene homo- and/or copolymer matrix.

According to a preferred embodiment the matrix is a propylene homopolymer having a xylene cold soluble (XCS) content in the range from 0.5 to 4.5 wt.-%, more preferably in the range from 0.8 to 4.0 wt.-%, still more preferably from 0.8 to 3.5 wt.-%.

According to one embodiment of the present invention, the polypropylene matrix has a melt flow rate $MFR_2$ (230 °C) of 10 to 300 g/10 min, preferably in the range from 25 to 150 g/10 min, more preferably in the range from 30 to 120 g/10 min.

Accordingly it is preferred that the propylene homo- and/or copolymer forming the matrix has a weight average

molecular weight (Mw) from 100000 to 400000 g/mol, preferably from 150000 to 350000, more preferably from 175000 to 300000 g/mol.

In addition to the polypropylene matrix phase, the heterophasic propylene copolymer (HECO) comprises an elastomeric propylene copolymer which is dispersed within said matrix.

According to one embodiment, the elastomeric propylene copolymer comprises monomers copolymerizable with propylene, for example, comonomers such as ethylene and/or $C_4$ to $C_{12}$ $\alpha$-olefins, preferably ethylene and/or $C_4$ to $C_{10}$ $\alpha$-olefins, e.g. 1-butene and/or 1-hexene. Preferably the elastomeric propylene copolymer comprises, especially consists of, monomers copolymerizable with propylene from the group consisting of ethylene, 1-butene and 1-hexene. More specifically the elastomeric propylene copolymer comprises - apart from propylene - units derivable from ethylene and/or 1-butene. Thus, in an especially preferred embodiment the elastomeric propylene copolymer phase comprises units derivable from ethylene and propylene only.

In case the polypropylene matrix is a random propylene copolymer it is preferred that the comonomer(s) of the random propylene copolymer and the elastomeric propylene copolymer are the same.

The properties of the elastomeric propylene copolymer mainly influence the xylene cold soluble (XCS) content of the heterophasic propylene copolymer (HECO). Thus, according to the present invention the xylene cold soluble (XCS) fraction of heterophasic propylene copolymer (HECO) is regarded as the elastomeric propylene copolymer of the heterophasic propylene copolymer (HECO).

According to one embodiment of the present invention, the amount of the elastomeric propylene copolymer, i.e. of the xylene cold soluble (XCS) fraction, of the heterophasic propylene copolymer (HECO) is in the range from 15 to 50 wt.-%, preferably in the range from 20 to 40 wt.-%, and more preferably in the range from 25 to 38 wt.-%, based on the total amount of the heterophasic propylene copolymer (HECO).

A further preferred requirement of the present invention is that the intrinsic viscosity (IV) of the xylene cold soluble (XCS) fraction of the heterophasic propylene copolymer (HECO) is rather high. Rather high values of intrinsic viscosity improve the impact strength. Accordingly it is appreciated that the intrinsic viscosity of the xylene cold soluble (XCS) fraction of heterophasic propylene copolymer (HECO) is above 1.5 dl/g, more preferably at least 1.8 dl/g, yet more preferably at least 2.0 dl/g, like at least 2.3 dl/g. On the other hand the intrinsic viscosity should be not too high otherwise the flowability is decreased. Thus the intrinsic viscosity of the xylene cold soluble (XCS) fraction of the heterophasic propylene copolymer (HECO) is preferably in the range of 1.8 to 4.5 dl/g, more preferably in the range 2.0 to 4.1 dl/g, still more preferably 2.3 to 4.0 dl/g.

According to one embodiment, the heterophasic propylene copolymer (HECO) of the present invention has a rather high melt flow rate. Accordingly it is preferred that the heterophasic polymer has a melt flow rate $MFR_2$ (230 °C) of at least 8 g/10 min, more preferably in the range from 8 to 300 g/10 min, and most preferably in the range from 10 to 100 g/10 min, still more preferably in the range from 10 to 80 g/10 min.

Processes for preparing heterophasic polymer systems are well known in the art, and are multi-step processes containing at least two process steps. A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315. A further suitable slurry-gas phase process is the Spheripol® process of Basell.

According to one embodiment of the present invention, the heterophasic propylene copolymer (HECO) is obtained by producing the polypropylene matrix phase in at least one reactor, transferring said matrix phase in at least one subsequent reactor, where in presence of the matrix the elastomeric propylene copolymer is produced.

A suitable catalyst for the polymerization of the heterophasic polymer composition is any stereospecific catalyst for propylene polymerization which is capable of polymerizing and copolymerizing propylene and comonomers at a temperature of 40 to 110°C and at a pressure from 10 to 100 bar. Ziegler-Natta as well as metallocene catalysts are suitable catalysts. One skilled in the art is aware of the various possibilities to produce such heterophasic polymers and will simply find out a suitable procedure to produce suitable heterophasic polymers which can be used in the present invention.

Especially preferred the heterophasic propylene copolymer (HECO) is the commercial product EF 015 AE of Borealis AG.

### Slip agents

A slip agent according to this invention is an additive that gradually migrates to the surface and/or reduces the coefficient of friction of the surface of an article made from a composition containing said slip agent.

The finding of the present invention is that the composition of the automotive interior article comprises a slip agent which is a fatty acid amide derivative of formula (I) as follows:

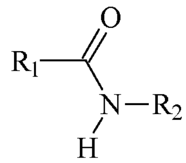

wherein $R_1$ is a $C_5$ to $C_{25}$ alkyl residue or $C_5$ to $C_{25}$ alkenyl residue
$R_2$ is a long-chain organic residue containing at least 6 carbon atoms.

Preferably the fatty acid amide derivative of formula (I) is the only slip agent in the composition, more preferably in the total automotive interior article.

Fatty acids, like fatty acid amides, are known to the skilled person. Typically a fatty acid and its derivatives contain an unbranched long chain aliphatic residue. Thus according to the present invention the residues of the slip agents are unbranched. More precisely the $C_5$ to $C_{25}$ alkyl residue or $C_5$ to $C_{25}$ alkenyl residue and the specific embodiments thereof are unbranched.

The term "long-chain organic residue" covers long chain aliphatic residues, like alkyl residues and alkenyl residues, as well as aliphatic residues comprising functional groups included in the chain, like -NH-CO-, -NH-, -CO-, or -O-.

The $R_1$ residue of the fatty acid amid derivative of formula (I) is preferably a $C_{10}$ to $C_{25}$ alkyl residue or $C_{10}$ to $C_{25}$ alkenyl residue.

The $R_2$ residue of the fatty acid amid derivative of formula (I) is preferably selected from the group consisting of an aliphatic amide derivative residue containing 6 to 30 carbon atoms, an aliphatic alkyl residue containing 5 to 30 carbon atoms, and an aliphatic alkeny residue containing 5 to 30 carbon atoms.

Thus in one specific embodiment the $R_2$ residue is a $C_5$ to $C_{25}$ alkyl residue or a $C_5$ to $C_{25}$ alkenyl residue.

In another specific embodiment the $R_2$ residue is $R_4$-NH-CO-$R_5$, with
$R_4$ being a covalent bond or a $C_1$ to $C_6$ alkyl residue, like $-CH_2-$ or $-CH_2-CH_2-$, and
$R_5$ being a $C_5$ to $C_{25}$ alkyl residue or a $C_5$ to $C_{25}$ alkenyl residue, more preferably a $C_5$ to $C_{25}$ alkyl residue.

In one preferred embodiment the fatty acid amid derivative is of formula (Ia)

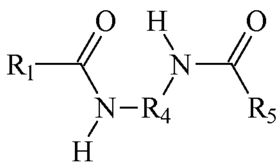

with
$R_1$ and $R_5$ being independently from each other a $C_5$ to $C_{25}$ alkyl residue, more preferably an unbranched $C_5$ to $C_{25}$ alkyl residue, still more preferably an unbranched $C_{10}$ to $C_{20}$ alkyl residue, like $-(CH_2)_nCH_3$, with n being a positive integer between 12 to 18, like 16, and $R_4$ being a $C_1$ to $C_6$ alkyl residue, preferably an unbranched $C_1$ to $C_6$ alkyl residue, more preferably $-CH_2-$ or $-CH_2-CH_2-$, still more preferably $-CH_2-CH_2-$.

It is especially preferred that $R_1$ and $R_5$ are identical and are $-(CH_2)_nCH_3$, with n being a positive integer between 12 to 18, like 16. Accordingly in preferred embodiment the fatty acid amid derivative of formula (Ia) as stated in the previous paragraph is N,N'-bisstearoylethylenediamide ($CH_3(CH_2)_{16}CONHCH_2CH_2NHCO(CH_2)_{16}CH_3$).

In another preferred embodiment the fatty acid amid derivative is of formula (Ia)

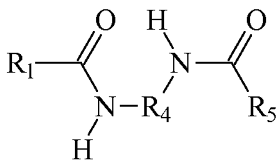

with
$R_1$ and $R_5$ being independently from each other a $C_5$ to $C_{25}$ alkenyl residue, more preferably an unbranched $C_5$ to $C_{25}$ alkenyl residue, still more preferably $-(CH_2)_xCH=CH(CH_2)_yCH_3$, with x = 4 to 15 and y = 3 to 10, preferably with x being a positive integer between 7 to 15 and y being a positive integer between 4 to 9.
$R_4$ being a $C_1$ to $C_6$ alkyl residue, preferably an unbranched $C_1$ to $C_6$ alkyl residue, more preferably $-CH_2-$ or $-CH_2-CH_2-$, still more preferably $-CH_2-CH_2-$.

It is especially preferred that $R_1$ and $R_5$ are identical and are $-(CH_2)_xCH=CH(CH_2)_yCH_3$, with x being positive integers between 4 to 15 and y being positive integers between 3 to 10, preferably with x being a positive integer between 7 to 15 and y being a positive integer between 4 to 9. Accordingly in preferred embodiment the fatty acid amid derivative is of formula (Ib) is N,N'-ethylene-bis-oleamide.

In still another preferred embodiment the fatty acid amid derivative is of formula (Ib)

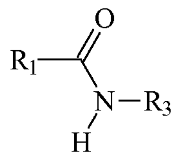

with

$R_1$ being a $C_5$ to $C_{25}$ alkyl residue, more preferably an unbranched $C_5$ to $C_{25}$ alkyl residue, still more preferably an unbranched $C_{10}$ to $C_{20}$ alkyl residue, like $-(CH_2)_nCH_3$, with n being a positive integer between 12 to 18, like 14, and $R_3$ being a $C_5$ to $C_{25}$ alkyl residue or $C_5$ to $C_{25}$ alkenyl residue, preferably a $C_5$ to $C_{25}$ alkenyl residue, more preferably a $-(CH_2)_xCH=CH(CH_2)_yCH_3$, with x being a positive integer between 4 to 15 and y being a positive integer between 3 to 10, preferably with x being a positive integer between 7 to 15 and y being a positive integer between 4 to 9.

Thus it is especially preferred that
$R_1$ is $-(CH_2)_nCH_3$, with n being a positive integer between 12 to 18, like 14, and
$R_3$ is $-(CH_2)_xCH=CH(CH_2)_yCH_3$, with x being a positive integer between 4 to 15 and y being a positive integer between 3 to 10, preferably with x being a positive integer between 7 to 15 and y being a positive integer between 4 to 9.

Accordingly in preferred embodiment the fatty acid amid derivative of formula (Ib) is N-9-octadecenyl hexadecanamide.

In yet another preferred embodiment the fatty acid amid derivative is of formula (Ib)

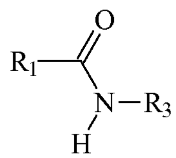

with

$R_1$ being a $C_5$ to $C_{25}$ alkenyl residue, preferably an unbranched $C_5$ to $C_{25}$ alkenyl residue, more preferably an unbranched $C_{10}$ to $C_{20}$ alkenyl residue, still more preferably - $(CH_2)_xCH=CH(CH_2)_yCH_3$, with x a positive integer between 4 to 15 and y a positive integer between 3 to 10, preferably with x a positive integer between 7 to 15 and y a positive integer between 4 to 9,

$R_3$ being a $C_5$ to $C_{25}$ alkyl residue or $C_5$ to $C_{25}$ alkenyl residue, preferably a $C_5$ to $C_{25}$ alkyl residue, more preferably an unbranched $C_5$ to $C_{25}$ alkyl residue, still more preferably an unbranched $C_{10}$ to $C_{20}$ alkyl residue, like $-(CH_2)_nCH_3$, with n a positive integer between 12 to 18, like 14.

Thus it is especially preferred that
$R_1$ is $-(CH_2)_xCH=CH(CH_2)_yCH_3$, with x a positive integer between 4 to 15 and y a positive integer between 3 to 10, preferably with x a positive integer between 7 to 15 and y a positive integer between 4 to 9, and
$R_3$ is $-(CH_2)_nCH_3$, with n a positive integer between 12 to 18, like 14.

Accordingly in preferred embodiment of the previous paragraph the fatty acid amid derivative of formula (Ib) is N-octadecyl-13-docosenamide

It is especially preferred that the fatty acid amid derivative of is of formula (Ia) and in particular is N,N'-bis-stearoylethylenediamide
$(CH_3(CH_2)_{16}CONHCH_2CH_2NHCO(CH_2)_{16}CH_3)$.

Preferably the fatty acid amide derivative is contained in a range of 2500 ppm to 18000 ppm, in particular preferred in a range of 4000 ppm to 8000 ppm.

**Additional components**

The composition of the automotive (interior) article may additionally contain

(d) inorganic filler
and/or
(e) polypropylene homopolymer
and/or
(f) high density polyethylene (HDPE).

Also further additives know by a person skilled in the art can be contained apart from those preferably disclaimed below. One typical example of such further additives are antioxidants. Preferably the inorganic filler is a phyllosilicate, mica or wollastonite. Even more preferred the inorganic filler is selected from the group consisting of mica, wollastonite, kaolinite, smectite, montmorillonite and talc. The most preferred the inorganic filler is talc.

The mineral filler preferably has a cutoff particle size d95 [mass percent] of equal or below 20 $\mu$m, more preferably below 10.0 $\mu$m, like below 8.0 $\mu$m

Typically the inorganic filler has a surface area measured according to the commonly known BET method with $N_2$ gas as analysis adsorptive of less than 22 $m^2/g$, more preferably of less than 20 $m^2/g$, yet more preferably of less than 18 $m^2/g$. Inorganic fillers fulfilling these requirements are preferably anisotropic mineral fillers, like talc, mica and wollastonite.

To improve further the stiffness of the composition for instance a propylene homopolymer and/or a high density polyethylene can be added.

Preferably the propylene homopolymer has a melt flow rate $MFR_2$ (230 °C) of 10.0 to 50.0 g/10min, more preferably from 15.0 to 40.0 g/10min.

If present, the high density polyethylene (HDPE) has preferably a density measured according to ISO 1183in the range of 0.954 to 0.966 g/$cm^3$ and a melt flow rate ($MFR_2$ at 190 °C) of 1.0 to 50.0 g/10min, more preferably from 5.0 to 40.0 g/10min.

**Composition**

As already mentioned above the composition being used for the automotive interior article must comprise:

(a) a heterophasic propylene copolymer (HECO)
and
(b) a fatty acid amide derivative of formula (I)

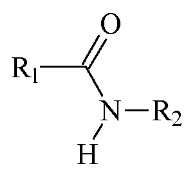

wherein $R_1$ is a $C_5$ to $C_{25}$ alkyl residue or $C_5$ to $C_{25}$ alkenyl residue $R_2$ is a long-chain organic residue containing at least 6 carbon atoms.

Prefered embodiments of the heterophasic propylene copolymer (HECO) are described in the section "heterophasic propylene copolymer" whereas preferred fatty acid amide derivative are described in the section "slip agents".

Optionally a propylene homopolymer and/or inorganic filler and/or a high density polymer (HDPE) can be present.

Thus the composition for the automotive interior article preferably comprises

(a) at least 40 wt.-%, more preferably 40 to 95 wt.-%, yet more preferably 45 to 60 wt-%, of the heterophasic propylene copolymer (HECO),

(b) at least 2500 ppm, preferably 2500 to 18000 ppm, yet more preferably 4000 to 8000 ppm, of a fatty acid amide derivative of formula (I)

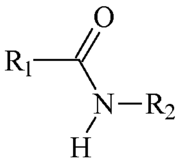

(I)

wherein

$R_1$ is a $C_5$ to $C_{25}$ alkyl residue or $C_5$ to $C_{25}$ alkenyl residue
$R_2$ is a long-chain organic residue containing at least 6 carbon atoms,

(c) optionally at least 5 wt.-%, more preferably 5 to 30 wt.-%, yet more preferably 7 to 25 wt.-%, of propylene homopolymer,
(d) optionally at least 5 wt.-%, more preferably 5 to 30 wt.-%, yet more preferably 10 to 20 wt.-%, of inorganic filler, and
(e) optionally at least 5 wt.-%, more preferably 5 to 30 wt.-%, yet more preferably 7 to 20 wt.-%, of high density polyethylene (HDPE).

The composition of the present invention can be prepared by any suitable method known in the art, such as by blending the heterophasic propylene copolymer (HECO), the fatty acid amide of formula (I) and the additional polymer components, if present, as well as any optional further additives listed above, either directly, e.g. in an extruder, such that the same extruder is used to make the finished product, or by melt pre-mixing in a separate mixer or extruder. For mixing, a conventional compounding or blending apparatus, e.g. a Banburry mixer, a 2-roll rubber mill, Buss-co-kneader or a twin screw extruder may be used.

Furthermore the use of a composition comprising

(a) a heterophasic propylene copolymer (HECO) and
(b) a fatty acid amide derivative of the formula (I)

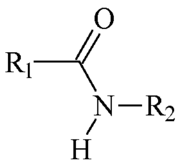

wherein $R_1$ is a $C_5$ to $C_{25}$ alkyl residue or $C_5$ to $C_{25}$ alkenyl residue and $R_2$ is a long-chain organic residue containing at least 6 carbon atoms for production of an automotive interior article as described before is inventive.

Additionally the invention encompasses the use of a composition comprising

(a) a heterophasic propylene copolymer (HECO)
(b) a fatty acid amide derivative of formula (I)

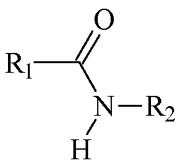

wherein

$R_1$ is a $C_5$ to $C_{25}$ alkyl residue or $C_5$ to $C_{25}$ alkenyl residue and
$R_2$ is a long-chain organic residue containing at least 6 carbon atoms, wherein the long term scratch resistance of an article, preferably of an automotive (interior) article, containing a fatty acid amide of formula (I) is improved and/or the surface tack is reduced in comparison with an article comprising the same composition without a slip

agent.

Concerning the prefered embodiments of the heterophasic propylene copolymer (HECO) and the fatty acid amide derivative, repectively, reference is made to the information provided above.
The composition of the present invention is preferably used for the production of automotive articles, like molded automotive articles, preferably automotive injection molded articles. Even more preferred is the use of the inventive composition for the production of car interiors like body panels.
According to a preferred embodiment of the present invention, the composition of the present invention is used for the production of automotive articles, preferably interior automotive articles, more preferably dash boards, instrument panels, door claddings, arm rests, gear sticks, shift lever knobs, mats, interior skins, trunk claddings, or interior trims. Moreover the present invention is directed to the use of a slip agent being a fatty acid amide derivative of formula (I)

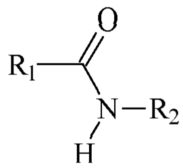

wherein

$R_1$ is a $C_5$ to $C_{25}$ alkyl residue or $C_5$ to $C_{25}$ alkenyl residue and
$R_2$ is a long-chain organic residue containing at least 6 carbon atoms
in a polypropylene, preferably in a heterophasic propylene copolcmer (HECO), for improving the long term scratch resistance and/or for reducing the surface tack of the polypropylene, preferably of the heterophasic propylene copolcmer (HECO), and/or of an automotive (interior) article comprising the polypropylene, i.e. the heterophasic propylene copolymer (HECO).

The expression "polypropylene" as used throughout the instant invention covers any polypropylene, like a propylene homopolymer, a random propylene copolymer or a heterophasic propylene copolymer. Preferably the polypropylene is a heterophasic propylene copolymer (HECO) as defined herein. Thus, concerning the preferred embodiments of the heterophasic propylene copolymer (HECO) and the fatty acid amide derivative, repectively, reference is made to the information provided above. Accordingly, particular preferred is the use of fatty acid amide derivatives according to formulas (Ia) and (Ib).
Preferably the improvement of scratch resistance is determined as the long term scratch resistance (two weeks after molding and at 95 °C) [oven ageing], wherein the long term scratch resistance (two weeks after molding and at 95 °C) [oven ageing] of the propylene, preferably of the heterophasic propylene copolymer (HECO), is at least factor 4.0 lower, preferably at least a factor 5.0 lower, more preferably a factor 6.0 lower, like a factor 6.0 to 8.0 lower, than the long term scratch resistance (two weeks after molding and at 95 °C) of the same polypropylene, preferably the same heterophasic propylene copolymer (HECO), but without a slip agent. The measuring method for the scratch resistance is described in the example section.
Preferably the reduced surface tack is measured as the surface tack factor (especially after two weeks at 95 °C), wherein the surface tack factor (especially after two weeks at 95 °C) [oven ageing] of the polypropylene, preferably the heterophasic propylene copolymer (HECO), is at least a factor 1.8 lower, more preferably at least a factor 2.5 lower, like a factor 2.2 to 3.0 lower, than the surface tack factor (especially after two weeks at 95 °C) [oven ageing] of the same polypropylene, preferably of the same heterophasic propylene copolymer (HECO), but without a slip agent. The measuring method for the surface tack factor is described in the example section.
By using the described compositions respectively slip agents for the production of automotive interior articles there can be obtained an improved long term scratch and reduced surface tack of these articles. Accordingly the values provided with regard to the long term scratch resistance (especially after two weeks at 95 °C) [oven ageing] and the surface tack factor (especially after two weeks at 95 °C) [oven ageing] for the polypropylene as such are equally applicable for automotive (interior) articles comprising the instant composition and/or slip agent as defined above
It was found surprisingly that the article according to the invention shows much better properties regarding the scratch resistance as well as the surface tack by higher temperatures and after longer times, e.g. two weeks.
Especially at temperatures of 80 °C or higher temperatures (i.e. 90 °C) the inventive automotive interior article shows much better properties regarding especially scratch resistance and surface tack as articles made of state of the art compositions.
This property is necessary e.g. for automotive interior articles, which have to stay unscratched for many years

although they are exposed to quite different influences.

The present invention will now be described in further detail by the examples provided below.

## EXAMPLE

### 1 Measuring Methods

The following definitions of terms and determination methods apply for the above general description of the invention as well as to the below examples unless otherwise defined.

The **Density** was measured according to ISO 1183-1 - method A (2004). Sample preparation is done by compression moulding in accordance with ISO 1872-2:2007.

The **ethylene content** was measured with Fourier transform infrared spectroscopy (FTIR) calibrated with $^{13}C$-NMR. When measuring the ethylene content in propylene, a thin film of the sample (thickness about 250 $\mu$m) was prepared by hot-pressing. The area of absorption peaks 720 and 733 $cm^{-1}$ was measured with Perkin Elmer FTIR 1600 spectrometer. The method was calibrated by ethylene content data measured by $^{13}C$-NMR.

### Molecular weights, molecular weight distribution (Mn, Mw, MWD)

Mw/Mn/MWD were measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 $\mu$L of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

The **$MFR_2$ (230 °C)** was measured according to ISO 1133 (230 °C, 2.16 kg load).

The **$MFR_2$ (190 °C)** was measured according to ISO 1133 (190 °C, 2.16 kg load).

The **gloss** was measured on injection moulded grained specimen according to DIN 67530 at an angle of 60°. The grain for gloss measurements was identical to the grain used in evaluation of scratch visibility.

The **content of xylene cold solubles (XCS, wt.-%)** was determined at 25 °C according ISO 16152; first edition; 2005-07-01.

**Particle size** is measured according to ISO 13320-1:1999

The **intrinsic viscosity** was measured according to DIN ISO 1628/1, October 1999 (in decalin at 135 °C).

The **tensile modulus** was measured according to ISO 527-2 (cross head speed = 1 mm/min; 23 °C) using injection moulded specimens as described in EN ISO 1873-2 (dog bone shape, 4 mm thickness).

### Scratch visibility

To determine the scratch visibility a Cross Hatch Cutter Model 420P, manufactured by Erichsen, was used. For the tests, plaques of 70x70x4 mm size were cut from a moulded grained (grain parameters: average grain size = 1 mm, grain depth = 0.12 mm, conicity = 6°) plaque of size 140x200x4 mm. The minimum period between injection moulding of specimens and scratch-testing was 7 days.

For testing the specimens must be clamped in a suitable apparatus as described above. Scratches were applied at a force of 10 N or 15 N using a cylindrical metal pen with a ball shaped end (radius = 0.5 mm $\pm$ 0.01). A cutting speed of 1000 mm/min was used.

A minimum of 20 scratches parallel to each other were brought up at a load of 10 N with a distance of 2 mm. The application of the scratches was repeated perpendicular to each other, so that the result was a scratching screen. The scratching direction should be unidirectional. The scratch visibility is reported as the difference of the luminance $\Delta L$ of the unscratched from the scratched areas. $\Delta L$ values were measured using a spectrophotometer that fulfils the requirements to DIN 5033. Light source for quantification of $\Delta L$ D65/10°. Measured $\Delta L$ values must be below a maximum of 1.5.

A detailed test description of the test method (Erichsen cross hatch cutter method) can be found in the article

"Evaluation of scratch resistance in multiphase PP blends" by Thomas Koch and Doris Machl, published in POLYMER TESTING 26 (2007), p. 927-936.

**Surface tack**

The surface tack measurement was performed on injection moulded multigrain plaques with a film gate using the grain K29. The K29 surface is defined as a grain with a grain depth of 0.01 mm, and a minimum draft angle of 1° for ejection from the injection moulding tool. The section with this grain was cut out from the plaque with a bench shear.

To perform the experiments an Instron tensile testing machine was used (ElectroPuls E3000, Instron Deutschland GmbH, Germany) with an elastomer die tip having a diameter of 25 mm and a thickness of 5 mm. The compressive force F was -50 N, the holding time $t_H$ was 91 s, and the haul-off speed v was 55 mm/s. The tests were performed at standard laboratory climate conditions (23°C and 50% relative humidity). Each single surface tack measurement was performed with this setup in the following way: After the elastomer (NR/SBR) tip had been cleaned and attached to the die by means of a double-side adhesive tape, the tackiness force $F_T$ of both the aluminium reference and the specimen (sample) were measured. The surface tack is reported as tack quotient $Q_T$, which was calculated by the following Equation:

$$Q_T = \frac{F_{T,\ sample}}{F_{T,\ reference}}$$

and averaged over a minimum of three successive measurements.

A detailed description of the test method for quantifying surface tack can also be found in the paper "A novel test method for quantifying surface tack of polypropylene compound surfaces" by Çakmak et al., which will be published in eXPRESS Polymer Letters in 2011.

**UV-aging**

For weathering, the specimens were faced around a light source in an environmental chamber (WeatherOmeterCi4000, Atlas Material Testing Technology GmbH; Linsengericht, Germany) and artificially weathered using the Kalahari weathering condition. The weathering conditions of the chamber were:

- Light source: Xenon arc light
- Filter: Pyrex S
- Black standard temperature: 90°C
- Chamber temperature in the dry phase: 50°C
- Relative humidity: 20%
- Intensity of irradiation (300-400 nm): 75 W/m$^2$.

After the UV exposure the specimens were conditioned for approximately 1 h at 23 °C and 50% relative humidity before testing surface tack.

5 plaques of each material were put into the UV chamber (PV3929 dry and hot - Kalahari test). After 24, 48, 96, 192 and 384 h one plaque per material was taken out of the chamber. For each of these samples Surface tack and scratch resistance were determined.

**Oven ageing of samples**

For thermal ageing, the specimens were put into a fan oven at 80°C and 95°C In the current investigation the specimens were aged for 7 and 14 days. After the temperature exposure the specimens were conditioned for approximately 1 h at 23°C and 50% relative humidity before testing surface tack.

**2 Examples**

One polymer composition according to the present invention (IE: inventive example) and six comparative compositions (CE: comparative examples) were prepared. The components of the compositions are listed on table 1.

The polymer compositions were prepared by melt blending the components on a corotating twin screw extruder type Coperion ZSK 40 (screw diameter 40 mm. L7/D ratio 38) at temperatures in the range of 170-190 °C, using a high intensity mixing screw configuration with two sets of kneading blocks.

**Table 1: Compositions**

| | Unit | C1 | C2 | C3 | C4 | C5 | IE |
|---|---|---|---|---|---|---|---|
| H-PP | [wt.-%] | 58.5 | 58.3 | 58.4 | 57.9 | 56.5 | 57.9 |
| PP | [wt.-%] | 12.0 | 12.0 | 12.0 | 12.0 | 12.0 | 12.0 |
| HDPE | [wt.-%] | 11.0 | 11.0 | 11.0 | 11.0 | 11.0 | 11.0 |
| IF | [wt.-%] | 17.0 | 17.0 | 17.0 | 17.0 | 17.0 | 17.0 |
| ESA | [wt.-%] | | 0.2 | | | | |
| ÖSA | [wt.-%] | | | 0.15 | | | |
| SR | [wt.-%] | | | | 0.6 | | |
| EBS | [wt.-%] | | | | | | 0.6 |
| Tego | [wt.-%] | | | | | 2.0 | |

* the remaining part to 100 wt.-% are additives and colorants
H-PP is the commercial heterophasic propylene copolymer "EF015AE" of Borealis AG having a melt flow rate $MFR_2$ (230 °C) of 18 g/10 min, a XCS of 29 wt.-%, and an ethylene content (C2) of 20 wt.-%
PP is the commercial propylene homopolymer "HF955MO" of Borealis AG having a melt flow rate $MFR_2$ (230 °C) of 20 g/10 min
HDPE is the commercial high density polyethylene "MG9641B" of Borealis AG having a melt flow rate $MFR_2$ (190 °C) of 8 g/10 min and a density of 964 kg/m$^3$
IF is the commercial product "Steamic T1 CA" of Luzenac having a median particle size d50 of 2.1μm
ESA is the commercial erucamide "Finawax E" of Fine organics
OSA is the commercial 9-octadecenamide "Chrodamide OR" of Croda Chemical
SR is the commercial stearamide "Crodamide SR" of Croda Chemical
EBS is the commercial NN'-bisstearoylethylenediamide "Licolub FA6" of Clariant
Tego is the commercial product "Tegomer AS 100" of Evonik

**Table 2:** Properties in unstored state

| | Unit | C1 | C2 | C3 | C4 | C5 | IE |
|---|---|---|---|---|---|---|---|
| MFR 230°C/2.16 kg | g/10 min | 14.4 | 15.0 | 15.4 | 16.6 | 16.0 | 16.0 |
| Delta 1w | None | 4.69 | 1.16 | 0.91 | 2.23 | 1.05 | 4.62 |
| Gloss 60° on K09 | [%] | 3.3 | 3.0 | 3.3 | 3.3 | 3.5 | 3.4 |
| Tack quotient $Q_T$ | none | 0.67 | 0.60 | 0.88 | 0.68 | 0.74 | 0.78 |
| Delta 1w | delta one week after moulding | | | | | | |

**Table 3:** Surface properties after artificial wheatering at various times

| | | | | | | | |
|---|---|---|---|---|---|---|---|
| Delta L 24h | None | 4.69 | 1.16 | 0.91 | 2.23 | 1.05 | 4.62 |
| Delta L 48h | None | 2.48 | 1.51 | 3.31 | 1.93 | 0.92 | 2.65 |
| Delta L 96h | None | 3.53 | 1.44 | 3.69 | 1.80 | 0.92 | 1.55 |
| Delta L 192h | None | 3.53 | 1.54 | 3.56 | 2.24 | 0.91 | 1.09 |
| Delta L 384h | None | 3.14 | 2.03 | 3.12 | 2.31 | 0.52 | 1.38 |
| Tack quotient $Q_T$ 24h | None | 0.57 | 0.62 | 0.56 | 0.71 | 0.67 | 0.51 |
| Tack quotient $Q_T$ 48h | None | 0.85 | 0.68 | 0.97 | 0.83 | 0.63 | 0.58 |
| Tack quotient $Q_T$ 96h | None | 0.75 | 0.66 | 0.66 | 0.88 | 0.66 | 0.33 |

(continued)

| | | | | | | | |
|---|---|---|---|---|---|---|---|
| Tack quotient $Q_T$ 192h | None | 0.61 | 0.58 | 0.79 | 0.73 | 0.46 | 0.51 |
| Tack quotient $Q_T$ 384h | None | 0.75 | 0.45 | 0.64 | 0.70 | 0.49 | 0.31 |

**Table 4:** Surface properties after 14 days oven-ageing at different temperatures

| | Unit | C1 | C2 | C3 | C4 | C5 | IE |
|---|---|---|---|---|---|---|---|
| Delta L 65°C | None | 3.70 | 1.64 | 2.47 | 0.16 | 1.65 | 3.20 |
| Delta L 80°C | None | 3.37 | 1.20 | 1.82 | 1.86 | 1.04 | 0.29 |
| Delta L 95°C | None | 3.38 | 1.76 | 3.20 | 2.14 | 1.52 | 0.40 |
| Tack quotient $Q_T$ 65°C | None | 0.94 | 0.83 | 0.91 | 0.58 | 0.73 | 0.65 |
| Tack quotient $Q_T$ 80°C | None | 0.82 | 0.69 | 0.81 | 0.63 | 0.74 | 0.31 |
| Tack quotient $Q_T$ 95°C | None | 0.99 | 0.90 | 0.59 | 0.80 | 0.80 | 0.32 |

## Claims

1. Use of a fatty acid amide derivative of formula (I)

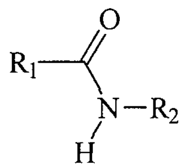

wherein

$R_1$ is a $C_5$ to $C_{25}$ alkyl residue or $C_5$ to $C_{25}$ alkenyl residue,
$R_2$ is a long-chain organic residue containing at least 6 carbon atoms,

in an amount of 2500 to 18000 ppm in an article comprising a heterophasic propylene copolymer (HECO) to reduce the surface tack in comparison with the same article but without a slip agent.

2. Use according to claim 1, wherein the article is an automotive interior article.

3. Use according to claim 2, wherein the fatty acid amid derivative is of formula (Ia)

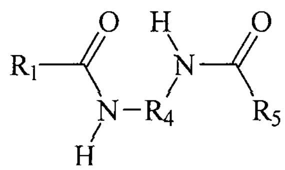

wherein

$R_1$ and $R_5$ being independently from each other a $C_5$ to $C_{25}$ alkyl residue,
$R_4$ being a $C_1$ to $C_6$ alkyl residue.

4. Use according to claim 2 or 3, wherein the fatty acid amid derivative of formula (Ia) is N,N'-bisstearoylethylenediamide.

5. Use according to one of claims 2 to 4, wherein the composition comprises additionally

(c) inorganic filler
and/or
(d) polypropylene homopolymer
and/or
(e) high density polyethylene (HDPE).

6. Use according to claims 2 or 3, wherein saturated fatty acid amide derivative of formula (I) is the only slip agent being contained in the composition and/or in the automotive interior article.

7. Use according to claims 2 or 3, wherein the composition comprises

(a) 40 to 95 wt.-%, of the heterophasic propylene copolymer (HECO),
(b) optionally 5 to 30 wt.-% of the propylene homopolymer,
(c) optionally 5 to 30 wt.-% of the inorganic filler, and
(d) optionally 5 to 30 wt.-% of the high density polyethylene (HDPE).

8. Use of a slip agent being a fatty acid amide derivative of formula (I)

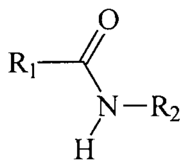

wherein

$R_1$ is a $C_5$ to $C_{25}$ alkyl residue or $C_5$ to $C_{25}$ alkenyl residue,
$R_2$ is a long-chain organic residue containing at least 6 carbon atoms in an amount of 2500 to 18000 ppm in a propylene, preferably in a heterophasic propylene copolymer (HECO), for reducing surface tack in comparison with the same polypropylene, preferably the same heterophasic propylene copolymer (HECO), but without a slip agent.

9. Use of the slip agent according to claim 8 for improving the long term scratch resistance of the polypropylene, preferably of the heterophasic propylene copolymer (HECO), in comparison with the same polypropylene, preferably the same heterophasic propylene copolymer (HECO), but without a slip agent.

10. Use according to one of claims 1, 8 and 9, wherein the long term scratch resistance (after two weeks at 95 °C) of the polypropylene, preferably of the heterophasic propylene copolymer (HECO), is at least factor 4.0 lower than the long term scratch resistance (especially after two weeks at 95 °C) of the same polypropylene, preferably of the same heterophasic propylene copolymer (HECO), without a slip agent.

11. Use according to one of claims 1, 8 and 9, wherein the surface tack is determined by the surface tack factor, the surface tack factor (after two weeks at 95 °C) of the polypropylene, preferably of the heterophasic propylene copolymer (HECO), is at least a factor 1.8 lower than the surface tack factor (after two weeks at 95 °C) of the same polypropylene, preferably of the same heterophasic propylene copolymer (HECO), without a slip agent.

## Patentansprüche

1. Verwendung eines Fettsäureamid-Derivats der Formel (I)

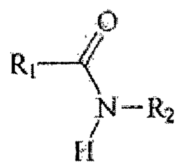

worin

$R_1$ ein $C_5$ bis $C_{25}$-Alkyl-Rest oder $C_5$ bis $C_{25}$-Alkenyl-Rest ist,
$R_2$ ein lang-kettiger organischer Rest ist, der mindestens 6 Kohlenstoff-Atome enthält,

in einer Menge von 2500 bis 18000 ppm in einem Gegenstand, umfassend ein heterophasisches Propylen-Copolymer (HECO), um die Oberflächen-Klebrigkeit im Vergleich mit dem gleichen Gegenstand, jedoch ohne ein Gleit-Mittel, zu verringern.

**2.** Verwendung nach Anspruch 1, wobei der Gegenstand ein Fahrzeug-Innenausstattungs-Gegenstand ist.

**3.** Verwendung nach Anspruch 2, wobei das Fettsäureamid-Derivat die Formel (Ia) aufweist

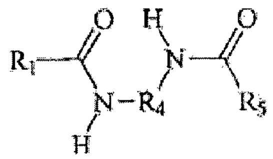

worin

$R_1$ und $R_5$ unabhängig voneinander einen $C_5$ bis $C_{25}$-Alkyl-Rest darstellen,
$R_4$ einen $C_1$ bis $C_6$-Alkyl-Rest darstellt.

**4.** Verwendung nach Anspruch 2 oder 3, wobei das Fettsäureamid-Derivat der Formel (Ia) N,N'-Bisstearoylethylendiamid ist.

**5.** Verwendung nach einem der Ansprüche 2 bis 4, wobei die Zusammensetzung zusätzlich umfasst

(c) anorganischen Füllstoff
und/oder
(d) Polypropylen-Homopolymer
und/oder
(e) hoch-dichtes Polyethylen (HDPE).

**6.** Verwendung nach Ansprüchen 2 oder 3, wobei das gesättigte Fettsäureamid-Derivat der Formel (I) das einzige Gleit-Mittel ist, das in der Zusammensetzung und/oder in dem Fahrzeug-Innenausstattungs-Gegenstand enthalten ist.

**7.** Verwendung nach Ansprüchen 2 oder 3, wobei die Zusammensetzung umfasst

(a) 40 bis 95 Gew.-% des heterophasischen Propylen-Copolymers (HECO),
(b) gegebenenfalls 5 bis 30 Gew.-% des Propylen-Homopolymers,
(c) gegebenenfalls 5 bis 30 Gew.-% des anorganischen Füllstoffs und
(d) gegebenenfalls 5 bis 30 Gew.-% des hoch-dichten Polyethylens (HDPE).

**8.** Verwendung eines Gleit-Mittels, das ein Fettsäureamid-Derivat der Formel (I) ist

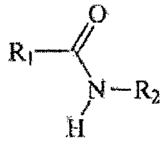

$R_1$ ein $C_5$ bis $C_{25}$-Alkyl-Rest oder $C_5$ bis $C_{25}$-Alkenyl-Rest ist,
$R_2$ ein lang-kettiger organischer Rest ist, der mindestens 6 Kohlenstoff-Atome enthält, in einer Menge von 2500 bis 18000 ppm in einem Propylen, vorzugsweise in einem heterophasischen Propylen-Copolymer (HECO), um die Oberflächen-Klebrigkeit im Vergleich mit dem gleichen Polypropylen, vorzugsweise dem gleichen heterophasischen Propylen-Copolymer (HECO), jedoch ohne ein Gleit-Mittel, zu verringern.

**9.** Verwendung des Gleit-Mittels nach Anspruch 8 zum Verbessern der Lang-Zeit-Kratz-Beständigkeit des Polypropylens, vorzugsweise des heterophasischen Propylen-Copolymers (HECO), im Vergleich mit dem gleichen Polypropylen, vorzugsweise dem gleichen heterophasischen Propylen-Copolymer (HECO), jedoch ohne ein Gleit-Mittel.

**10.** Verwendung nach einem der Ansprüche 1, 8 und 9, wobei die Lang-Zeit-Kratz-Beständigkeit (nach zwei Wochen bei 95°C) des Polypropylens, vorzugsweise des heterophasischen Propylen-Copolymers (HECO), mindestens Faktor 4,0 geringer als die Lang-Zeit-Kratz-Beständigkeit (insbesondere nach zwei Wochen bei 95°C) des gleichen Polypropylens, vorzugsweise des gleichen heterophasischen Propylen-Copolymers (HECO) ohne ein Gleit-Mittel, ist.

**11.** Verwendung nach einem der Ansprüche 1, 8 und 9, wobei die Oberflächen-Klebrigkeit durch den Oberflächen-Klebrigkeits-Faktor bestimmt wird, wobei der Oberflächen-Klebrigkeits-Faktor (nach zwei Wochen bei 95°C) des Polypropylens, vorzugsweise des heterophasischen Propylen-Copolymers (HECO), mindestens ein Faktor 1,8 geringer als der Oberflächen-Klebrigkeits-Faktor (nach zwei Wochen bei 95°C) von dem gleichen Polypropylen, vorzugsweise von dem gleichen heterophasischen Propylen-Copolymer (HECO) ohne ein Gleit-Mittel, ist.

## Revendications

**1.** Utilisation d'un dérivé d'amide d'acide gras de formule (I)

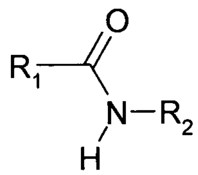

dans laquelle

$R_1$ est un résidu alkyle en $C_5$ à $C_{25}$ ou un résidu alcényle en $C_5$ à $C_{25}$,
$R_2$ est un résidu organique à longue chaîne contenant au moins 6 atomes de carbone,
en une quantité de 2 500 à 18 000 ppm dans un article comprenant un copolymère de propylène hétérophasique (HECO) pour réduire la pégosité de surface en comparaison avec le même article mais sans agent de glissement.

**2.** Utilisation selon la revendication 1, dans laquelle l'article est un article d'intérieur d'automobile.

**3.** Utilisation selon la revendication 2, dans laquelle le dérivé d'amide d'acide gras est de formule (Ia)

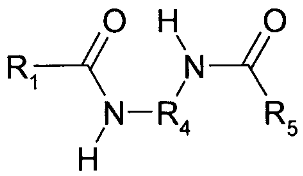

dans laquelle

$R_1$ et $R_5$, indépendamment l'un de l'autre, sont des résidus alkyle en $C_5$ à $C_{25}$,
$R_4$ est un résidu alkyle en $C_1$ à $C_6$.

**4.** Utilisation selon la revendication 2 ou 3, dans laquelle le dérivé d'amide d'acide gras de formule (Ia) est le N,N'-bis-stéaroyléthylènediamide.

**5.** Utilisation selon l'une des revendications 2 à 4, dans laquelle la composition comprend de plus

(c) une charge inorganique,
et/ou
(d) un homopolymère de polypropylène,
et/ou
(e) un polyéthylène haute densité (HDPE).

6. Utilisation selon la revendication 2 ou 3, dans laquelle le dérivé d'amide d'acide gras saturé de formule (I) est le seul agent de glissement contenu dans la composition et/ou dans l'article d'intérieur d'automobile.

7. Utilisation selon la revendication 2 ou 3, dans laquelle la composition comprend

(a) 40 à 95 % en poids du copolymère de propylène hétérophasique (HECO),
(b) éventuellement 5 à 30 % en poids de l'homopolymère de propylène,
(c) éventuellement 5 à 30 % en poids de la charge inorganique, et
(d) éventuellement 5 à 30 % en poids du polyéthylène haute densité (HDPE).

8. Utilisation d'un agent de glissement qui est un dérivé d'amide d'acide gras de formule (I)

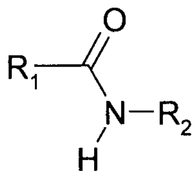

dans laquelle

$R_1$ est un résidu alkyle en $C_5$ à $C_{25}$ ou un résidu alcényle en $C_5$ à $C_{25}$,
$R_2$ est un résidu organique à longue chaîne contenant au moins 6 atomes de carbone,
en une quantité de 2 500 à 18 000 ppm dans un copolymère de propylène, de préférence un copolymère de propylène hétérophasique (HECO), pour réduire la pégosité de surface en comparaison avec le même polypropylène, de préférence le même copolymère de propylène hétérophasique (HECO), mais sans agent de glissement.

9. Utilisation de l'agent de glissement selon la revendication 8 pour améliorer la résistance aux rayures sur le long terme du polypropylène, de préférence du copolymère de propylène hétérophasique (HECO), en comparaison avec le même polypropylène, de préférence le même copolymère de propylène hétérophasique (HECO), mais sans agent de glissement.

10. Utilisation selon l'une des revendications 1, 8 et 9, dans laquelle la résistance aux rayures sur le long terme (après deux semaines à 95°C) du polypropylène, de préférence du copolymère de propylène hétérophasique (HECO), est inférieure d'un facteur d'au moins 4,0 à la résistance aux rayures sur le long terme (en particulier après deux semaines à 95°C) du même polypropylène, de préférence du même copolymère de propylène hétérophasique (HECO), sans agent de glissement.

11. Utilisation selon l'une des revendications 1, 8 et 9, dans laquelle la pégosité de surface est déterminée par le facteur de pégosité de surface, le facteur de pégosité de surface (après deux semaines à 95°C) du polypropylène, de préférence du copolymère de propylène hétérophasique (HECO), étant inférieur d'un facteur d'au moins 1,8 au facteur de pégosité de surface (après deux semaines à 95°C) du même polypropylène, de préférence du même copolymère de propylène hétérophasique (HECO), sans agent de glissement.

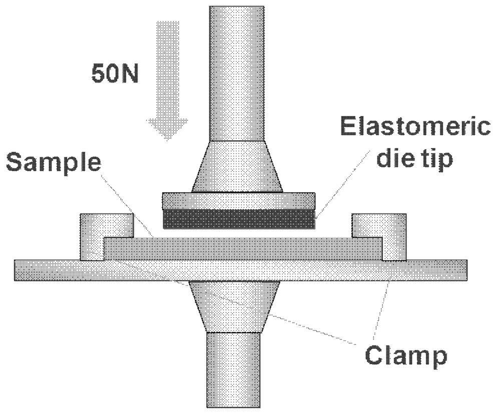


**Figure 1** Shows the testing principle for surface tack measurements.

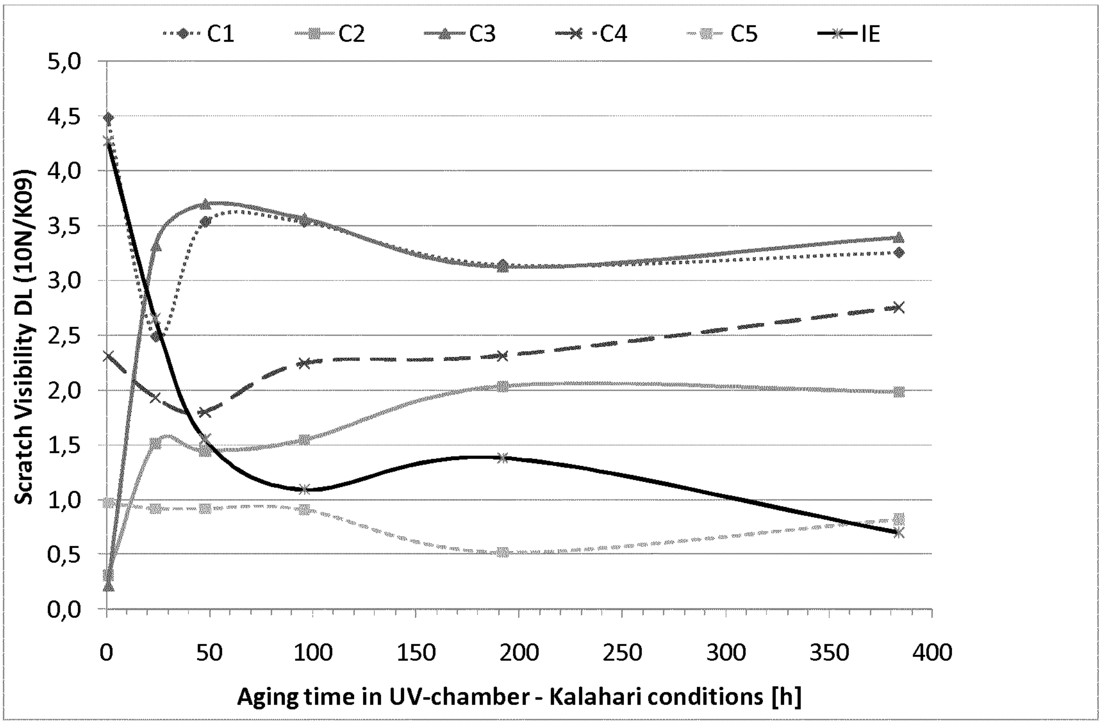


**Figure 2** Scratch visibility as function of UV-aging

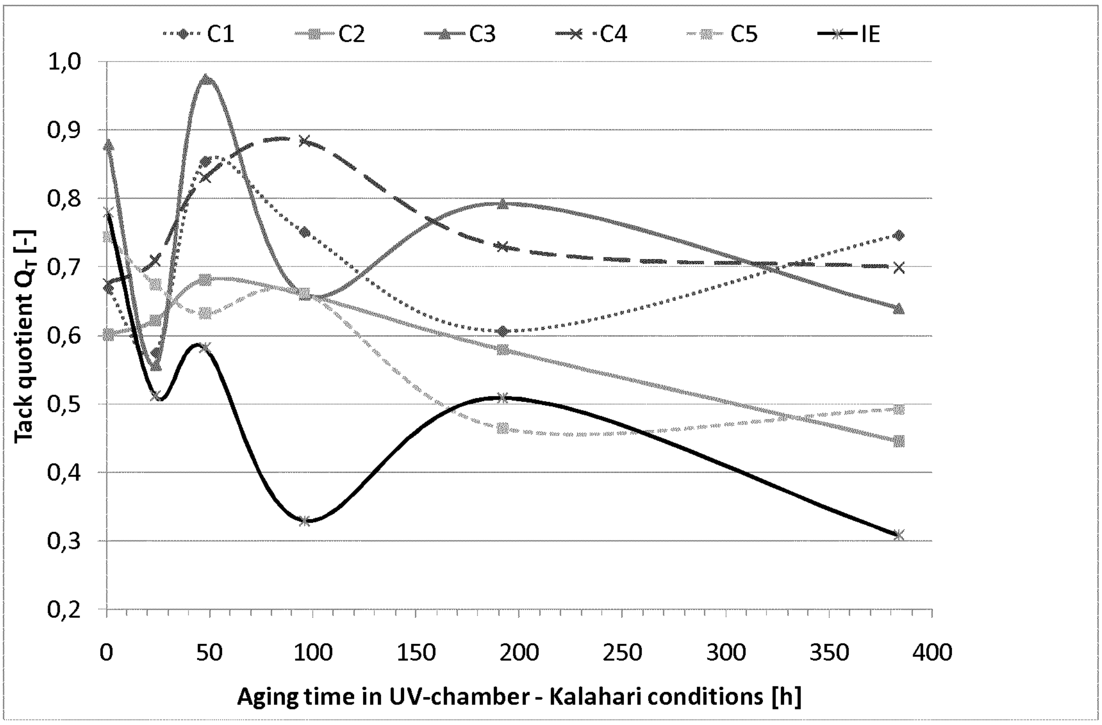


**Figure 3** Surface tack as function of UV-aging time

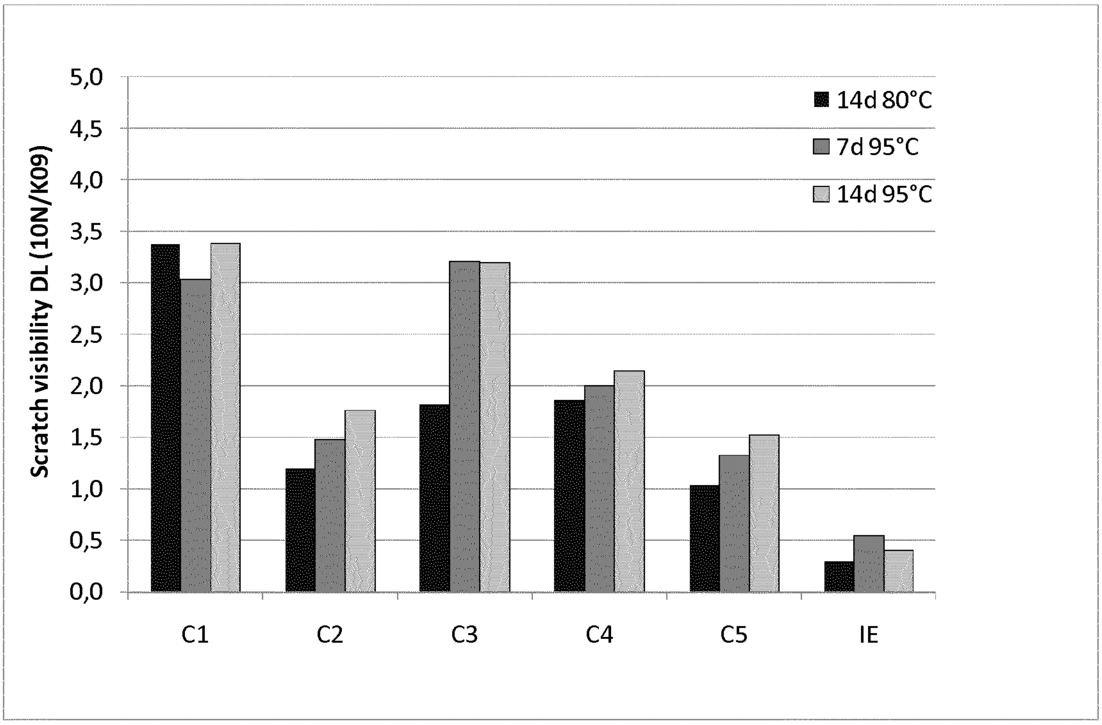


**Figure 4** Scratch resistance of samples for different ageing times at 65 °C

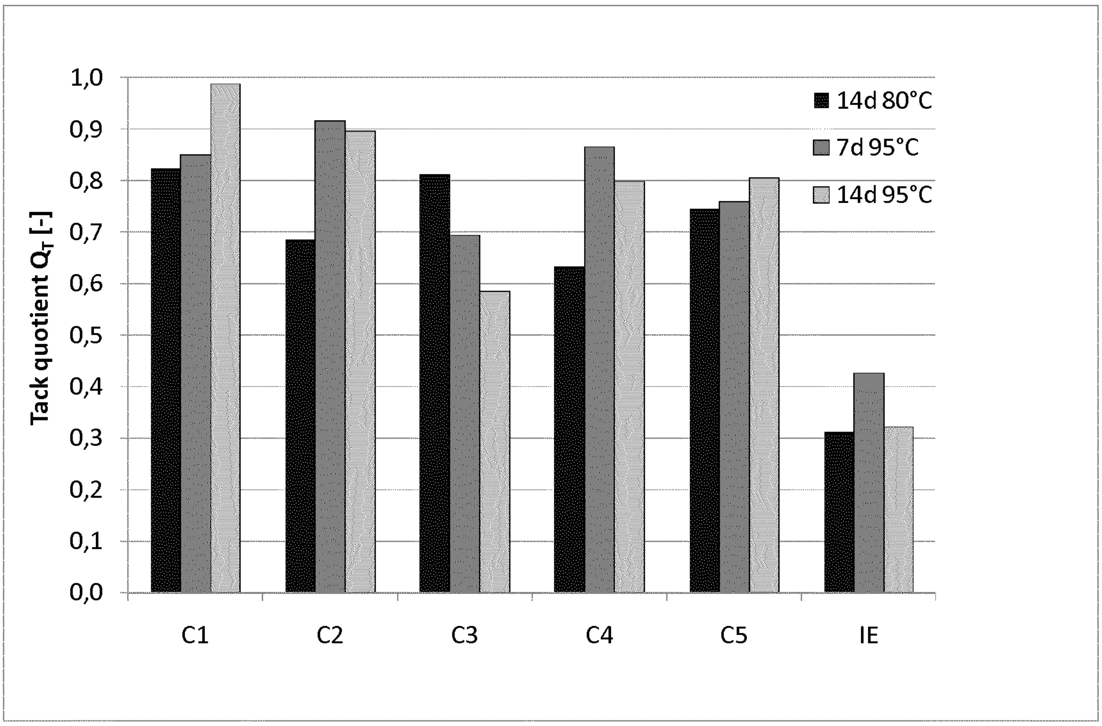


**Figure 5** Surface tack of samples for different aging times at 65 °C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006131455 A1
- EP 2083046 A1
- WO 2007139622 A3
- WO 0222731 A2
- WO 2005111145 A1
- WO 2006063698 A1
- EP 0887379 A
- WO 9212182 A
- WO 2004000899 A
- WO 2004111095 A
- WO 9924478 A
- WO 9924479 A
- WO 0068315 A


### Non-patent literature cited in the description


- **HUBER, G. ; SOLERA, P.** New Additive to Improve Scratch Resistance and Reduce Surface-Tack for Automotive Applications. *First Automotive Congress - Plastics in Motion,* 2006
- **BOTKIN, J.** Technical Approaches to Improving the Scratch Resistance of TPO's. Part1: Surface Lubrication. *SPE Automotive TPO Global Conference,* 2007
- **BOTKIN, J.** Technical Approaches to Improving the Scratch Resistance of TPO's. Part1 : Surface Lubrication. *SPE Automotive TPO Global Conference,* 2007
- **THOMAS KOCH ; DORIS MACHL.** Evaluation of scratch resistance in multiphase PP blends. *POLYMER TESTING,* 2007, vol. 26, 927-936
- **ÇAKMAK et al.** A novel test method for quantifying surface tack of polypropylene compound surfaces. *eXPRESS Polymer Letters,* 2011